# EUROPEAN PATENT SPECIFICATION

(11) **EP 3 354 453 B1**
(45) Date of publication and mention of the grant of the patent: **23.09.2020**
(21) Application number: 17153360.7
(22) Date of filing: 26.01.2017
(51) Int. Cl.: B32B 5/02, B32B 5/18, B32B 5/24, B32B 5/26, B32B 27/12

(54) **ACOUSTIC CARPET FOR VEHICLES**
AKUSTISCHER TEPPICH FÜR FAHRZEUGE
TAPIS ACOUSTIQUE POUR VÉHICULES

(43) Date of publication of application: 01.08.2018
(73) Proprietor: Autoneum Management AG, 8406 Winterthur (CH)
(72) Inventor: Delmas, Bertrand, 8406 Winterthur (CH)

(56) References cited:
- WO-A1-2016/166218
- DE-U1-202016 100 525
- US-A1- 2004 180 177
- US-A1- 2012 024 626

## Description

### Technical Field

The invention is directed to a noise absorbing flooring system, the use of such a system in the car as well as the method of production thereof.

### Background Art

DE 20 2016 100525 U1 discloses a noise absorbing multilayer comprising two fibrous layers and a knit fabric between them.

US 2004/180177 A1 discloses a noise absorbing multilayer for a flooring system for a car, comprising 3 consecutive layers, with an air flow resistive layer between two non-woven layers. It is known to use films for binding two fibrous layers, like for instance a nonwoven carpet surface layer and a back layer. As these films stay impervious to air, the secondary back layer or layers cannot contribute to noise absorption. Therefore it is known to slit or perforate the film to obtain a pervious binder layer and enhance the overall absorption of the part.

Although this works in theory and in praxis well on flat samples, it becomes less effective on 3 D formed car parts. The material to form these trim parts are pressed in moulds and certain areas will stretch over the maximal stretching ability of the film, causing further opening of the originally formed perforations or slits or even tearing of the film. This will reduce the air flow resistance below the minimal required level for improved sound absorption, thereby locally deteriorating the acoustic performance. In addition, it becomes difficult to fine tune the overall airflow resistance or to keep it constant as the production process becomes an unpredictable factor in the overall performance.

Combinations of thin film and nonwoven failed also to obtain an even acoustic performance over the trim part after the 3D moulding step. Nonwovens are unpredictable when stretched during the moulding process; they are also prone to tear and might even become impermeable by the adhesive closing the nonwoven.

It is therefore the object of the invention to obtain a noise absorbing multilayer that is enhanced in the possibility to tune the air flow resistance over the entire surface of the moulded trim part without unwanted local differences.

### Summary of invention

This object is achieved by noise absorbing multilayer system according to claim 1 . Further, preferred embodiments are covered by the dependent claims.

In particular, by a noise absorbing multilayer comprising at least 3 consecutive layers, with a nonwoven carpet facing layer being a first fibrous layer (1) and an back layer being the second fibrous layer (2) and an air flow resistive layer between the first and the second fibrous layer, characterised in that the air flow resistive layer is a combination of a knit fabric (4) and a thermoplastic resin material (3) whereby the thermoplastic resin material is at least partly penetrated in the knit fabric at least closing part of the pores of the knit fabric.

In a preferred solution the thermoplastic resin material is also at least partly penetrated in the first fibrous layer and in the second fibrous layer joining or laminating these layers to the air flow resistive layer.

Laminating is defined in the sense of bonding layers at least over the contact surface together.

Surprisingly the use of a knit fabric with a resin material penetrated partly through the openings of the knit fabric as claimed forms an air flow resistive layer that is more predictable and uniform in its performance. As stretched knits keep their pattern and will not tear that easily, a more even air flow resistance can be obtained. Furthermore the pattern of the knit guides the resin material distribution during the production creating an even and predictable air flow resistance over the part produced.

The type of knit, the resin material as well as the material of both fibrous layers influence the air flow resistance obtained in the final product.

Preferably the resin material has a viscosity (defined by the melt flow index (MFI)) at the production temperature set that is sufficient to penetrate the knit first before wicking into the adjacent fibrous layer, so the main material will migrate towards and through the knit rather than disappear into the adjacent fibrous layer. This can be achieved by optimising the knit pattern as well as the MFI in combination with the melting temperature of the resin material and or by optimising the process parameters used.

A knit pattern with a combination of large openings and close or tightly knitted areas forming small openings is advantageously used. Such a knit pattern will give rise to areas defined by the large openings, where the resin material can flow more easily through the knit fabric and bind to the fibrous layer at the other side of the knit fabric. In other areas defined by smaller openings or tighter knit patterns, the resin material is more restricted in its flow and will stay more locally, binding to the second fibrous layer. As the resin material is staying around the knit but migrating in a direction perpendicular to the surface of the knit, a pervious structure is created by the combination of the knit fabric and the resin material forming an air flow resistive layer, with a substantially regular pattern.

This is further enhanced by an even distribution of the resin material over the at least one surface of the knit fabric during production, preferably using a film as basis for the resin material. Preferably the film is placed between the knit fabric and the second fibrous layer. During the production process the resin material is heated at least close to its melting temperature, and able to flow. At this molten stage, the thermoplastic material penetrates at least partially in the knit openings and through the knit openings in the first fibrous layer, as well as in the second fibrous layer. The penetration of the thermoplastic resin is preferably not extending over the thickness of the first and second fibrous layer, such that it is visibly staining visible surfaces of the final product in use.

Preferably the knit fabric and one or both fibrous layers have a melting temperature, preferably a softening temperature which is higher than the melting temperature of the resin material or the binder of the first and or second fibrous layer or layers. The melting temperature of the knit and the fibrous materials might be roughly the same.

Preferably the melting temperature of the binder is lower than the melting temperature of the thermoplastic resin material.

Preferably this air flow resistive layer is tuned to obtain an overall air flow resistance (AFR) of the part produced of between 750 and 7000Ns/m³ after moulding. Preferably the AFR is between 2500 and 6000Ns/m³, more preferably up to 4500Ns/m³ for the combination of the air flow resistive layer and both fibrous layers. The AFR may be measured according to current ISO 9053, using the direct airflow method (method A).

There may be a difference between the AFR obtained for the multilayer layer laminate and for the multilayer laminate after moulding the 3D part. However an even measurement over the surface of the product can be achieved. The AFR after moulding might be lower. This effect might be further optimised by the choice of the MFI and temperature of the thermoplastic resin used.

By using the multilayer system according to the invention a multilayer noise absorbing system can be created that is due to the ability to adjust or tune the air flow resistance of the middle air flow resistive layer can be optimised to the acoustic absorption needed for the trim part used in a vehicle. The 3 layers according to the invention are porous and pervious to air within the air flow resistance range given.

### First and second fibrous layer

The noise absorbing multilayer according to the invention comprises of at least 3 consecutive layers, with a nonwoven carpet facing layer being a first fibrous layer and a back layer being the second fibrous layer.

Such a nonwoven carpet facing layer may comprise a needle punched decorative face layer, for instance produced from fibrous webs made on a card, and cross lapped to increase area weight. The thus formed web is reinforced and consolidated by the reciprocating action of barbed needles repeatedly penetrating the web so that the material becomes matted and decreases in thickness. The formed web might be diloured for a loftier appearance.

The area weight of such a nonwoven carpet face layer used as standard in vehicles are dependent on the area of use as well as the exclusivity of the car, normally in a range between 180 - 800 g/m², for instance in the high end car segment this can be up to 700 g/m², while in the low end car segment this can be as low as 200 g/m².

For a nonwoven carpet used as an aesthetic or decorative face layer the needle punched fibrous mat may be kept as a plain needle punch carpet or the plain needle punched carpet layer may be further enhanced by additional needling to give a more structured surface, this may be in the form of a ribbed, velour or random velour, also known as dilour. Other surface treatments to enhance the appearance without impairing the abrasion performance are also possible and fall in the scope of this disclosure. The surfaces might be cropped or uncropped.

The back layer being the second fibrous layer is preferably carded, cross lapped and eventually needled. Adjacent this layer on the surface facing away from the air flow resistive layer additional layers can be used, for instance a foam layer, either slab foam or reaction injected foam, another fibrous layer, a thin nonwoven like a scrim or a closed or open film.

The first or second fibrous layer may comprise staple fibres preferably polyester, like polyethylene terephthalate (PET), polyolefin, preferably polypropylene (PP) or polyethylene (PE), or poly (lactic)acid (PLA), polyamide, like polyamide 6 or polyamide 6-6, or mixtures thereof. The second fibrous layer may also contain recycled shoddy fibres such as shoddy cotton, shoddy PET or other synthetic shoddy fibres or mixtures thereof.

The fibres used may have a solid cross section but also fibres with a hollow cross section might be preferred, for instance to further enhance the carpet top layer in feel and durability and or to make the second fibrous layer lighter and or loftier.

In case the first and or second fibrous layer is needled, a low amount of additional binder, preferably thermoplastic, might be added to the fibre blends to further enhance the durability of the carpet after it is moulded. Preferably at least 0-50% of binder, for instance in the form of binder staple fibres are used. As binder a low melt polyester or polyolefin, with a melt point lower than the staple fibres just discussed can be used. Preferably a polyester bi-component fibre is used for instance a fibre with a PET core and a Co-Polyester sheath, whereby only the sheath melts in order to achieve the bonding of the staple fibres.

In case the first and or second fibrous layer is not mechanically needled a higher amount of binder might be mixed in the original fibres to enable the binding of the fibers between each other during moulding and thereby forming a bonded felt material. The binder is in this case up to 50% of binder, preferably between 10 and 40% of binder, ever more preferred between 20 and 30% of binder.

The same types of binders can be used with similar conditions for all fibrous layers.

The first and or second fibrous layer might be a combination of frizzy hollow conjugate fibers with bi-component binder fibers and shoddy material, for instance cotton shoddy or polyester shoddy.

Eventually foam chips might be mixed in the second fibrous layer forming the back layer, preferably up to 30%, more preferred up to 25% of the total area weight of the layer.

For example the second fibrous layer forming the back layer consists of 10 to 40% of binder, 10 to 70% of filler, preferably solid, fibers and 10 to 70% of frizzy, preferably hollow, fibers and wherein the total amount adds to 100% by weight.

For example the second fibrous layer forming the back layer consists of 10 to 40% of binder, 10 to 40% of filler, preferably solid, fibers and 10 to 60% of frizzy, preferably hollow, fibers and 10 to 50% shredded foam pieces and wherein the total amount adds to 100% by weight.

Filler fibers are defined as any type of fibers that forms the bulk of the fibrous layer and is not melted during the production of the trim part. Preferably the filler fibers may comprise reclaimed fibers made of at least one material selected from the group consisting of cotton shoddy, synthetic shoddy, polyester shoddy, natural fiber shoddy and mixed synthetic fiber

The fibrous layer forming the back layer might have a constant density at variable thickness and is preferably pre-consolidated to keep the overall distribution of the fibrous material before combining with the other layers.

The first and second layer may be the same material composition. However the first and second fibrous layers might be differentiated based on their final function in the overall layering.

Preferably the nonwoven carpet facing layer being a first fibrous layer has an area weight between 100 and 1700 g/m², preferably between 300 and 1500 g/m², preferably between 400 and 1300 g/m².

Preferably the back layer being the second fibrous layer has an area weight between 200 and 1700 g/m², preferably between 300 and 1500 g/m², preferably between 400 and 1300 g/m².

### Knit fabric

To obtain an air flow resistive layer according to the invention the knit fabric, pattern as well as coarseness of the yarn might have an influence on the final air flow resistance and may be used to fine tune the air flow resistance required in the final product.

The advantage of using a knit fabric rather than a nonwoven or perforated foil layer is that the openings in the fabric are produced during the production of the knitted fabric and are based on the knit pattern and the coarseness of the yarn as well as the process parameters chosen. This makes the amount and distribution of the openings controllable and not random like for nonwoven fabrics. Furthermore the opening is produced during the knitting process hence the material itself is not further impaired to create the openings.

The knit fabric material is preferably polyester based, like polyethylene terephthalate (PET) or nylon based, preferably polyamide 6 or polyamide 6.6 or mixtures of such materials.

The pattern of the knit might be regular, preferably a warp knit such as a plain knit or interlock knit, or circular knit might be used. More preferably a knit with a pattern of different sized openings or with a combination of large openings and tightly knitted areas is used, for example an ajour type knit with a combination of large and small openings in a regular pattern. Ajour knits are based on the stitch transfer technique creating a pattern of openings in the knitted fabric. Other lace knitting fabrics, like filet knits, creating stable openings arranged in the fabric might be used as well.

The pattern can be chosen to further optimise the air flow resistance needed. For example if a lower air flow resistance is needed a more open knit might be chosen or the opposite if a higher air flow resistance is needed. However the same can be achieved by combining a pattern with large openings and tightly knitted areas. Preferably a combination of large and small openings in a regular pattern is chosen to obtain a basic air flow resistance that can be further tuned by the choice of the resin material.

Also a custom made knit might be used where the pattern is adapted to obtain different areas of air flow resistance within the final product using a combination of different patterns.

Different types of knits, patterns or textures, for instance warp, pique, interlock or jacquard as well as 3 dimensional types of knits might be used. Also the choice of the yarn for the knit as well as the yarn type - sleek or textured - has an influence on the apparent openness of the fabric.

To increase the overall stretch performance the fabric might comprise elastic yarn or yarn made of elastic fibers. The knitted fabric may comprise elastic yarn such that the fabric is stretchable in all directions of the plane in approximately equal amounts.

The knits used might be treated to prevent shrinkage and deforming for instance by a thermo fixation treatment of the knit and or a washing treatment. The washing step might also eliminate unwanted residues of the knitting process that may interfere with the later process steps, in particular with the resin migration step and or the lamination of the layers as such.

Preferably the knitted fabric has an area weight of between 10 and 150 g/m², preferably an area weight between 20 to 100g/m². More preferred the knit has an area weight in the range of between 25 and 80g/m².

Preferably the knit is made with yarn of between 15 and 150dtex, preferably between 20-100dtex. Preferably the knit is made with a knitting gauge between 3-80, preferably between 10-50.

### Thermoplastic material

The thermoplastic resin used needs a defined viscosity to enable an even flow through at least the larger pores of the knit to reach the other side of the knit and bond to the first fibrous top layer. This can be achieved by selecting a resin material tuned to have the necessary viscosity at the process temperature used for the production of the noise absorbing multilayer and or a part including such a multilayer.

The thermoplastic resin material may comprise at least one of the polymers or copolymers selected from the group consisting of Polyester such as polyethylene terephthalate (PET) or polybutylene terephthalate (PTB) or copolyester (CoPES), polyamide such as polyamide 6 or polyamide 66, polyolefin such as a polyethylene (PE) or low density polyethylene (LDPE) or linear low density polyethylene (LLDPE) or high density polyethylene (HDPE), polypropylene (PP), thermoplastic elastomers (TPEs) such as thermoplastic polyolefin (TPO), thermoplastic polyurethane (TPU), polyetherimide, polysulfone, polyethersulfone, polyetheretherketone and copolymers such as ethylene vinyl acetate (EVA) or biopolymers such as polylactic acid.

The thermoplastic resin material may comprise preferably at least one of a polyolefin, for instance polyethylene, polypropylene, low density polyethylene LDPE, or linear low density polyethylene (LLDPE), a nylon, for instance polyamide like polyamide- 6 or polyamide-6-6, or a copolymer of polyester as the base resin or as the main resin component.

The thermoplastic resin used can generally comprise a single thermoplastic resin or several different components having multiple and sometimes overlapping functions. Generally a base or back bone resin controls the cohesive strength and toughness of the adhesive character of the resin. Modifying or tackifying resins might be included to contribute specific wetting of the first or second fibrous layer or the knit fabric or adhesion characteristics and to compatibilize other components. Other additives might be used for instance to reduce the melt viscosity or stabilize the resin material. Fillers might be added to lower cost and or increase the viscosity.

The MFI of the thermoplastic resin material should be chosen such that the resin is fully molten and flowing at the production temperature of the multilayer structure. In addition the MFI is depending on the pattern chosen for the knit. A knit with a pattern with large openings needs a lower MFI at production temperature than a knit with a pattern of substantially smaller openings. If the MFI is too low at the production temperature of the 3 layer structure, the resin will not migrate through the knit and or migrate in the first and or second layer partly. While with a MFI that is too high the resin will wick into the first and second layer completely and not stay inside the knit pattern. This might even cause a bleed through to the surface of the part which is unwanted from an aesthetic perspective.

In addition the MFI is depending on the target AFR. At a given knit pattern, a higher viscosity or lower MFI, will be chosen for High AFR, and the opposite for low AFR.

Preferably the thermoplastic resin material has a melting range of between 110°C and 240°C.

For example in combination with a pattern of large openings and small openings and a process temperature of between 230°C and 240°C, a resin with a melting range between 200°C and 220°C, with a MFI measured at 230°C of around 35 may be used. However if a resin with an MFI measured at 210°C of around 35 is used the process temperature can be set between 200 and 210°C.

For example in combination with a pattern of small openings and a process temperature of between 230°C and 240°C, a thermoplastic resin with a MFI measured at 210°C of around 35 may be used.

The thermoplastic resin material has preferably a melting point of at least 20°C, preferably 40°C, higher than the melting point of the binder used in the first and second fibrous layer.

The thermoplastic resin material is preferably provided in the form of a film, a hot melt coating, like a plain roll hot melt coating, or binding layer so an even distribution of the resin material is given.

The thickness of the film can be adjusted such that the resin material distributes over the fibrous layers and the knit and becomes open to form together with the knit fabric the air flow resistive layer. If the film is too thick the material available would be enough to keep a closed layer, if the film is too thin there will not be enough resin penetrated through the knit and into the fibrous layers to form the laminate according to the invention.

In case of insufficient bonding between the knit fabric and one or both fibrous layers a bilayer or multilayer film might be used.

The melt flow rate is measured according to ISO standard 1133-1. The procedure for determining MFI is as follows: A small amount of the polymer sample is taken in the specially designed MFI apparatus. A die with an opening of typically around 2 mm diameter is inserted into the apparatus. A piston is introduced which acts as the medium that causes extrusion of the molten polymer. The sample is preheated for a specified amount of time at the temperature indicated. After preheating a specified weight is introduced into the piston. The weight exerts a force on the molten polymer and it immediately starts flowing through the die. A sample of the melt is taken after the desired period of time and is weighed accurately. MFI is expressed in grams of polymer per 10 minutes of duration of the test. Synonyms of Melt Flow Index are Melt Flow Rate and Melt Index. More commonly used are their abbreviations: MFI, MFR and MI.

Preferably the weight of the resin layer and the knit are of same order of magnitude.

Preferably the weight of the resin layer is between 25 and 200 g/m², most preferably between 40 and 120 g/m².

### Examples of a nonwoven carpet according to the invention

Generally a product can have the following preferred layering:
1. A 400 g/m² polyester nonwoven dilour carpet layer as the first fibrous layer;
2. A knit fabric preferably between 30 and 80 g/m² and a Co-PET film of approximately 50µm, roughly 50 g/m², forming together the air flow resistive layer according to the invention;
3. A second fibrous layer being an at least 300 g/m² needle punch nonwoven layer with 70% polyester fibers and 30% bi-component fibers having a core of PET and a sheath of Co-PET . The sheath will function as a binder for the fibrous layer.

The product after moulding will have preferably an air flow resistance of between 2500 and 4500 Nsm⁻³.

### Example 1

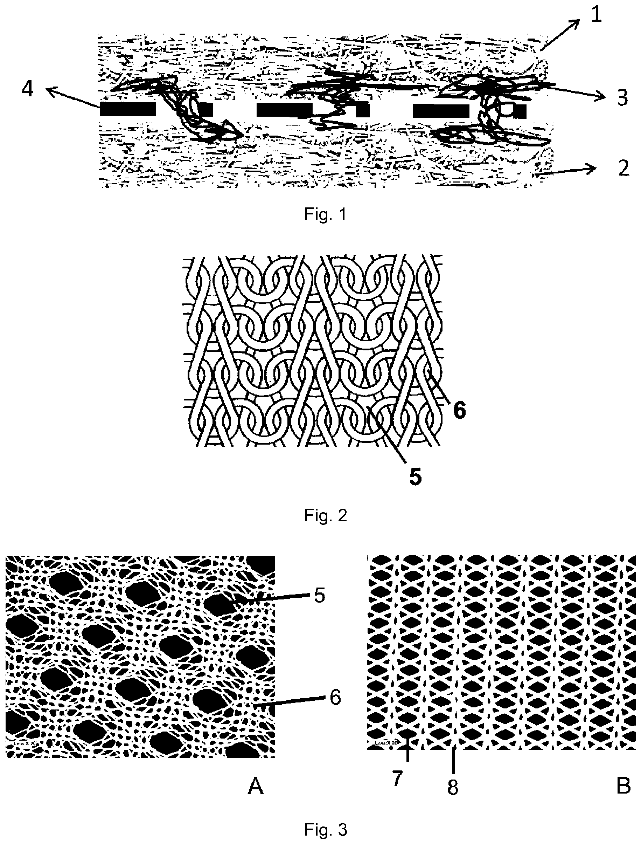

The following materials were used to form an automotive flooring according to the invention:
1. As the first fibrous layer forming the nonwoven carpet layer, a nonwoven dilour fibrous layer made of 100% polyester fibers was used.
2. As the second fibrous layer a nonwoven fibrous mat of 450g/m² was used made with 70% by weight Polyester fibers and 30% by weight polyester bicomponent fibers based on total weight of fibers .
3. The air flow resistive layer was formed by a 100% polyester jacquard knit of 70 g/m² as depicted in figure 3a. As the thermoplastic resin, a Co-polyester film with a density of 1.21kg/m³ and a melting range of 200-210°C.

All layers were laminated together and moulded in a 3D floor part for a car.

The results show an overall average airflow resistance of 3700Ns/m³ +/-15% measured on a moulded flooring part for a vehicle. In particular an even airflow resistance was measured over the full part and there were no main areas of diminished air flow resistance caused by tearing or overstretching of the knit fabric. Showing, that using a knit as basis for an air flow resistance results in an even airflow resistance over the part produced.

### Example 2

The same fibrous layers as example 1 were used, however the air flow resistive layer was now formed using a knitted fabric with the pattern as shown in figure 3b, resulting in an Air flow resistance measured of 825Ns/m³.

### Production process

The object is further achieved by the method of production in particularly by at least the following consecutive steps:
1. Stacking the materials, in particularly at least the second fibrous layer forming the back layer, thermoplastic resin layer and knit fabric. Whereby the thermoplastic resin layer is placed in between and in surface contact with the second fibrous layer and the knit fabric;
2. Heating the stacked layers preferably from the side of the knit fabric, such that the at least resin film layer is heated to at least the temperature corresponding to the desired viscosity;
3. In preferably a separate step, heating of at least one surface of the first fibrous layer being the nonwoven carpet surface layer;
4. Combining the heated materials of step 1 and step 3 such that the heated surface of the first fibrous layer and the heated surface of the knit fabric are in surface contact with each other and subjecting the as such stacked layer to pressure perpendicular to the surface, such that the resin material is forced to migrate through at least part of the voids of the knit fabric and partly in the first and second fibrous layer, thereby forming the air flow resistive layer and laminating all layer together.

Preferably step 4 is done using pressing means for instance through a set of rollers, whereby the gap between the rollers is smaller than the height of the stacked material.

The material coming from step 4 can be made as roll goods material also known as semi-finished material. This roll goods material can be cut and moulded to form an automotive trim part in additional steps, eventually combined with additional layers for instance at the side of the second fibrous layer.

### Brief description of the drawings

Figure 1 shows a schematic layout for a construction according to the invention.
Figure 2 shows a simple knit fabric structure
Figure 3 shows examples of preferred knit fabric patterns
Figure 4 shows a representation of a possible production process of the multilayer material according to the invention

Figure 1 shows a noise absorbing multilayer comprising at least 3 consecutive layers, with a nonwoven carpet facing layer being a first fibrous layer (1) and an back layer being the second fibrous layer (2) and an air flow resistive layer between the first and the second fibrous layer, whereby the air flow resistive layer is a combination of a knit fabric (4) and a thermoplastic resin material (3), with the thermoplastic resin material being at least partly penetrated in the knit fabric at least closing part of the pores of the knit fabric. Depending on the amount of openings blocked the air flow resistance can be fine-tuned. Openings may be fully blocked or just partially blocked.

Preferably the resin material is also partly penetrating in the first and or second fibrous layer laminating (bonding) all 3 layers together as shown.

In figure 2 and 3 examples of knitted fabrics are given. The knit pattern might influence the resin migration and therefore the air flow resistance obtained. The openness of a knit fabric may be influenced by the knitting machine gauge and the yarn size. For example a 32 gauge knit using a 84dtex yarn may have an open area of between 20 and 45% on average. Figure 2 shows a simple knit pattern with openings in the fabric (5, 6).

Figure 3 A and B show examples of knit patterns that might be used. Figure 3A shows a tricot mesh knit with large openings (5) combined with areas with a tight knit with small openings (6). The resin material might migrate through the large openings, but migration is mostly inhibited by the tightly knit areas. Figure 3B shows an example of net structure knit with a combination of large openings (7) and small openings (8) in a regular distribution.

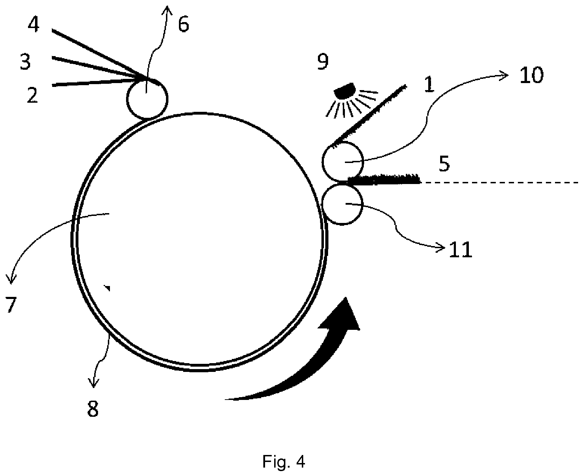

Figure 4 shows a possible process and machine set up for the production of the multilayer material according to the invention.

The second fibrous layer that may form a back layer in the final product (2), the thermoplastic resin film (3) and the knit fabric (4) are guided over rolls (6) to a hot drum (7) heated to a pre-set temperature to heat preferably all 3 layers, but at least the knit fabric and resin layer, preferably without adding pressure on the layers. One surface of the knit fabric is in direct contact with the hot drum, and the other side or surface is in direct contact with the thermoplastic resin film. The other side of the film is in direct contact to the second fibrous layer. The heating time is mainly dependent on the drum temperature and the thickness of the knit fabric and film layer as heating of the second fibrous layer throughout the entire thickness is not necessary.

Only a small thickness of the second fibrous layer needs to be heated to enable the flow into the top surface of this layer and achieve at least preliminary adhesion of this layer to the other 2 layers. The layers are heated with minimal pressure in the direction perpendicular to the plane of the surface of the layers to prevent migration of the thermoplastic resin material.

The hot drum temperature should be chosen such that at least the thermoplastic resin material is heated to obtain the temperature corresponding to the desired viscosity. The viscosity is dependent on the melt flow index of the thermoplastic resin in combination with the temperature reached.

Eventually via a second guiding roller, the first fibrous layer being the nonwoven carpet facing layer (1) is introduced. The first fibrous layer is preferably heated at the surface that will face the knit fabric, for instance with an infrared heater (9) or another hot drum. As with the second fibrous layer also this layer does not need to be heated throughout the thickness of the material, but only at the area of direct contact with the knit fabric to prevent instant cooling of the stacked layers in particularly of the resin material.

The first fibrous layer and the at least 3 layers are brought in direct contact, with the knit fabric facing the heated side of the first fibrous layer, and are guided through nip rollers 10 and 11. The gap between the nip rollers is such that a given pressure is put on the 4 layers perpendicular to the surface of the layers. By putting pressure on the layers, the molten resin of the film layer is forced to flow. The way of least resistance for the resin is through the knitted fabric, mainly through the larger openings of the pattern; therefore the resin material will migrate through the knitted fabric predominantly and bleed into the first fibrous layer. A small amount however will also bleed into the second fibrous layer. The openings of the knit fabric will be at least partly closed by the resin material, while at the same time due to the migration of the resin the originally closed film will disintegrate. Therefore, an air flow resistant layer is formed by the combined resin and knit fabric. Some of the resin material might penetrate the yarn material of the knit fabric without impairing the overall inventive idea presented. As the heating is not continued during or after the passage through the nip rollers, the material will cool down and further migration of the resin material is stopped before it can fully bleed in the first and or second fibrous layer. So part of the thermoplastic resin material will stay inside the knit fabric.

In a second process the multilayer material obtained can be heated at least at one side, preferably at the surface of the second fibrous layer, and cold moulded in a 3 dimensional shape, for instance to form a carpet flooring system for a vehicle or an inner dash panel. Alternatively a carpet flooring system can be formed by hot moulding the multilayer material according to the invention. Additional layers may be used on the surface of the second fibrous layer not in contact with the airflow resistive layer, further enhancing the overall performance of the trim part. For instance at least one of a film layer, open cell foam layer, additional felt layer, nonwoven scrim layer might be used. Materials for other purposes like impact might be integrated in the flooring system, for instance crash pads in the form of block foam. The multilayer system might be used also in combination with for instance a hard plastic shell forming a spacer for a raised flooring system.

Due to the use of a knitted fabric the air flow resistive layer formed is elastic and flexible and moulding in a 3D shape, even for more extreme forms, is possible. Surprisingly this does not impair the airflow resistance locally in high stretched areas, resulting in a trim part or cladding, for example a vehicle flooring system, having an constant noise absorption over substantially the whole surface of the part

The nonwoven acoustic material can be used for the main flooring of a vehicle, as loose mats, as cover of the inner dash area in the foot-well. However also as acoustic carpet surface layer on parcel shelves, in the trunk or other areas where a combination of an acoustic absorbing layer together with a nonwoven carpet surface layer might be used.

## Claims

1. Noise absorbing multilayer comprising at least 3 consecutive layers, with a nonwoven carpet facing layer being a first fibrous layer (1) and a back layer being the second fibrous layer (2) and an air flow resistive layer between the first and the second fibrous layer, **characterised in that** the air flow resistive layer is a combination of a knit fabric (4) and a thermoplastic resin material (3) and whereby the thermoplastic resin material is at least partly penetrated in the knit fabric at least closing part of the pores of the knit fabric.

2. Multilayer according to claim 1, whereby the thermoplastic resin material is at least partly penetrated in the first and second fibrous layer laminating these to the knit fabric.

3. Multilayer according to claim 1 or 2, whereby the knit fabric is either one of warp knit, circular knit, lace knit or jacquard knit.

4. Multilayer according to one of the preceding claims whereby the knit has a pattern of different sized openings or a combination of large openings and tightly knitted areas.

5. Multilayer according to one of the preceding claims whereby the knit fabric is preferably polyester based, like polyethylene terephthalate (PET) or nylon based, preferably polyamide 6 or polyamide 6.6 or mixtures of such materials.

6. Multilayer according to one of the preceding claims whereby the knit fabric has an area weight of between 10 to 150g.m², preferably an area weight between 20 and 100 g.m².

7. Multilayer according to one of the preceding claims, whereby thermoplastic resin material may comprise at least one of the polymers or copolymers selected from the group consisting of Polyester, such as polyethylene terephthalate (PET) or polybutylene terephthalate (PTB) or copolyester (CoPES), polyamide, such as polyamide 6 or polyamide 66, polyolefin, such as a polyethylene (PE) or low density polyethylene (LDPE) or linear low density polyethylene (LLDPE) or high density polyethylene (HDPE), polypropylene (PP), thermoplastic elastomers (TPEs) such as thermoplastic polyolefin (TPO), thermoplastic polyurethane (TPU), polyetherimide, polysulfone, polyethersulfone, polyetheretherketone and copolymers such as ethylene vinyl acetate (EVA) or biopolymers such as polylactic acid.

8. Multilayer according to one of the preceding claims, whereby the thermoplastic resin material has a melting range of between 110°C and 240°C.

9. Multilayer according one of the preceding claims, whereby the overall airflow resistance (AFR) of the part produced is between 750 and 7000Ns/m³.

10. Multilayer according to one of the preceding claims whereby the thermoplastic resin is provided as one of a molten film or a hot melt coating.

11. Multilayer according to one of the preceding claims, whereby the weight of the resin and the knit are in the same order of magnitude.

12. Multilayer according to one of the preceding claims whereby the nonwoven carpet layer has an area weight of between 100 and 1700g.m².

13. Multilayer according to one of the preceding claims whereby the second fibrous layer has an area weight of between 200 and 1700g.m².

14. Multilayer according to one of the preceding claims whereby the nonwoven carpet is plain or structured, such as ribbed, velour or random velour.

15. Multilayer according to one of the preceding claims whereby the first or second fibrous layer may comprise staple fibres, preferably polyester, like polyethylene terephthalate (PET), polyolefin, preferably polypropylene (PP) or polyethylene (PE), or poly (lactic)acid (PLA), polyamide, like polyamide 6 or polyamide 6-6, or mixtures thereof.

16. Multilayer according to one of the preceding claims whereby the fibers of the first and/or second fibrous layer have a solid or hollow cross section.

17. Multilayer according to one of the preceding claims whereby the second fibrous layer comprises recycled shoddy fibres such as shoddy cotton, shoddy polyester or other synthetic shoddy fibres or mixtures thereof.

18. Multilayer according to one of the preceding claims further comprising on the surface of the second fibrous layer not in contact with the air flow resistive layer at least one of a film layer, open cell foam layer, additional felt layer, nonwoven scrim layer or plastic shell.

19. Use of the noise absorbing multilayer according to claim 1 to 10 as an automotive flooring or as an automotive inner dash.

## Patentansprüche

1. Schallabsorbierende Multilayer, die mindestens 3 aufeinanderfolgende Schichten umfasst, mit einer Nadelfilz-Teppichdeckseite, die eine erste Faserschicht (1) ist, und einer Rückseitenschicht, die die zweite Faserschicht (2) ist, und einer Luftströmungswiderstandsschicht zwischen der ersten und der zweiten Faserschicht, **dadurch gekennzeichnet, dass** die Luftströmungswiderstandsschicht eine Kombination aus einem Strickgewebe (4) und einem Thermoplast-Harzmaterial (3) ist, und wobei das Thermoplast-Harzmaterial mindestens teilweise in das Strickgewebe eindringt, indem mindestens ein Teil der Poren des Streckgewebes geschlossen wird.

2. Multilayer nach Anspruch 1, wobei das Thermoplast-Harzmaterial mindestens teilweise in die erste und die zweite Faserschicht eindringt, indem diese an das Strickgewebe laminiert werden.

3. Multilayer nach Anspruch 1 oder 2, wobei das Strickgewebe entweder ein Kettengewirk, ein Rundgewirk, Spitzengewirk oder Jacquardgewirk ist.

4. Multilayer nach einem der vorstehenden Ansprüche, wobei das Gewirk ein Muster aus unterschiedlich bemessenen Öffnungen oder eine Kombination großer Öffnungen und eng gewirkter Flächen aufweist.

5. Multilayer nach einem der vorstehenden Ansprüche, wobei das Gewirk vorzugsweise auf Polyester, wie auf Polyethylenterephthalat (PET), oder auf Nylon, vorzugsweise Polyamid 6 oder Polyamid 6.6 oder Gemischen solcher Materialien basiert.

6. Multilayer nach einem der vorstehenden Ansprüche, wobei das Gewirk ein Flächengewicht von zwischen 10 bis 150 g.m², vorzugsweise ein Flächengewicht zwischen 20 und 100 g.m² aufweist.

7. Multilayer nach einem der vorstehenden Ansprüche, wobei das Thermoplast-Harzmaterial mindestens eines der Polymere oder Copolymere umfassen kann, die aus der Gruppe ausgewählt sind, die aus Polyester, wie einem Polyethylenterephthalat (PET) oder Polybutylenterephthalat (PTB) oder Copolyester (CoPES), Polyamid, wie einem Polyamid 6 oder Polyamid 66, Polyolefin, wie einem Polyethylen (PE) oder niedrigdichten Polyethylen (LDPE) oder linearen niedrigdichten Polyethylen (LLDPE) oder hochdichtem Polyethylen (HDPE), Polypropylen (PP), Thermoplast-Elastomeren (TPEs), wie Thermoplast-Polyolefin (TPO), Thermoplast-Polyurethan (TPU), Polyetherimid, Polysulfon, Polyethersulfon, Polyetheretherketon und Copolymeren, wie Ethylenvinylacetat (EVA), oder Bipolymeren, wie Polymilchsäure, besteht.

8. Multilayer nach einem der vorstehenden Ansprüche, wobei das Thermoplast-Harzmaterial einen Schmelzbereich zwischen 110 °C und 240 °C aufweist.

9. Multilayer nach einem der vorstehenden Ansprüche, wobei der Gesamt Luftströmungswiderstand (Air Flow Resistance - AFR) des erzeugten Teils zwischen 750 und 7000 Ns/m³ liegt.

10. Multilayer nach einem der vorstehenden Ansprüche, wobei das Thermoplastharz als eine einer geschmolzenen Folie oder einer Heißschmelzbeschichtung bereitgestellt ist.

11. Multilayer nach einem der vorstehenden Ansprüche, wobei das Gewicht des Harzes und des Gewirks in derselben Größenordnung liegen.

12. Multilayer nach einem der vorstehenden Ansprüche, wobei die Nadelfilz-Teppichschicht ein Flächengewicht zwischen 100 und 1700 g.m² aufweist.

13. Multilayer nach einem der vorstehenden Ansprüche, wobei die zweite Faserschicht ein Flächengewicht zwischen 200 und 1700 g.m² aufweist.

14. Multilayer nach einem der vorstehenden Ansprüche, wobei der Nadelfilzteppich flach oder strukturiert, wie gerippt, Velours oder Random Velor ist.

15. Multilayer nach einem der vorstehenden Ansprüche, wobei die erste oder die zweite Faserschicht Stapelfasern umfassen kann, vorzugsweise Polyester, wie Polyethylenterephthalat (PET), Polyolefin, vorzugsweise Polypropylen (PP) oder Polyethylen (PE), oder Poly-(Milch)-Säure (PLA), Polyamid, wie Polyamid 6 oder Polyamid 6-6 oder Gemische davon.

16. Multilayer nach einem der vorstehenden Ansprüche, wobei die Fasern der ersten und/oder zweiten Faserschicht einen massiven oder hohlen Querschnitt aufweisen.

17. Multilayer nach einem der vorstehenden Ansprüche, wobei die zweite Faserschicht recycelte Shoddy-Fasern, wie Shoddy-Baumwolle, Shoddy-Polyester oder andere synthetische Shoddy-Fasern oder Gemische davon umfasst.

18. Multilayer nach einem der vorstehenden Ansprüche, die weiter auf der Oberfläche der zweiten Faserschicht, die nicht mit der Luftströmungswiderstandsschicht in Berührung ist, mindestens eine einer Folienschicht, offenzelligen Schaumschicht, zusätzlichen Filzschicht, Vlies-Scrim-Schicht oder Kunststoffschicht umfasst.

19. Verwendung der Geräusch absorbierenden Multilayer nach Anspruch 1 bis 10 als Kraftfahrzeugbodenbelag oder Kraftfahrzeug-Innenstirnwand.

## Revendications

1. Multicouche absorbant le bruit comprenant au moins 3 couches consécutives, avec une couche de revêtement de tapis non tissé qui est une première couche fibreuse (1) et une couche arrière qui est la seconde couche fibreuse (2) et une couche résistant à un écoulement d'air entre la première et la seconde couche fibreuse, **caractérisée en ce que** la couche résistant à un écoulement d'air est une combinaison d'un tissu de tricot (4) et d'un matériau de résine thermoplastique (3) et selon laquelle le matériau de résine thermoplastique est entré au moins partiellement dans le tissu de tricot en fermant au moins une partie des pores du tissu de tricot.

2. Multicouche selon la revendication 1, selon laquelle le matériau de résine thermoplastique est entré au moins partiellement dans la première et la seconde couche fibreuse en stratifiant celles-ci sur le tissu de tricot.

3. Multicouche selon la revendication 1 ou 2, selon laquelle le tissu de tricot est n'importe lequel d'un tricot chaîne, un tricot circulaire, un tricot en dentelle ou un tricot jacquard.

4. Multicouche selon une des revendications précédentes selon laquelle le tricot présente une armure d'ouvertures de tailles différentes ou une combinaison de grandes ouvertures et de zones tricotées de manière serrée.

5. Multicouche selon une des revendications précédentes selon laquelle le tissu de tricot est de préférence à base de polyester, comme du polyéthylène téréphtalate (PET) ou à base de nylon, de préférence du polyamide 6 ou du polyamide 6,6 ou des mélanges de tels matériaux.

6. Multicouche selon une des revendications précédentes selon laquelle le tissu de tricot présente un poids surfacique de entre 10 à 150 g/m², de préférence un poids surfacique entre 20 et 100 g/m².

7. Multicouche selon une des revendications précédentes, selon laquelle un matériau de résine thermoplastique peut comprendre au moins un des polymères ou copolymères sélectionnés dans le groupe consistant en du polyester, tel que du polyéthylène téréphtalate (PET) ou du polybutylène téréphtalate (PTB) ou un copolyester (CoPES), du polyamide, tel que du polyamide 6 ou du polyamide 66, de la polyoléfine, telle qu'un polyéthylène (PE) ou un polyéthylène basse densité (LDPE) ou un polyéthylène linéaire à basse densité (LLDPE) ou un polyéthylène haute densité (HDPE), du polypropylène (PP), des élastomères thermoplastiques (TPE) tels que de la polyoléfine thermoplastique (TPO), du polyuréthanne thermoplastique (TPU), du polyétherimide, du polysulfone, du polyéthersulfone, de la polyétheréthercétone et des copolymères tels que de l'éthylène-acétate de vinyle (EVA) ou des biopolymères tels que de l'acide polylactique.

8. Multicouche selon une des revendications précédentes, selon laquelle le matériau de résine thermoplastique présente une plage de fusion entre 110 °C et 240 °C.

9. Multicouche selon une des revendications précédentes, selon laquelle la résistance à l'écoulement de l'air (AFR) globale de la pièce produite est entre 750 et 7 000 Ns/m³.

10. Multicouche selon une des revendications précédentes selon laquelle la résine thermoplastique est prévue comme un d'un film fondu ou un couchage par fusion.

11. Multicouche selon une des revendications précédentes, selon laquelle le poids de la résine et du tricot sont du même ordre de grandeur.

12. Multicouche selon une des revendications précédentes selon laquelle la couche de tapis non tissé présente un poids surfacique entre 100 et 1 700 g/m².

13. Multicouche selon une des revendications précédentes selon laquelle la seconde couche fibreuse présente un poids surfacique entre 200 et 1 700 g/m².

14. Multicouche selon une des revendications précédentes selon laquelle le tapis non tissé est uni ou structuré, tel que côtelé, du velours ou du velours aléatoire.

15. Multicouche selon une des revendications précédentes selon laquelle la première ou la seconde couche fibreuse peut comprendre des fibres courtes, de préférence du polyester, comme du polyéthylène téréphtalate (PET), de la polyoléfine, de préférence du polypropylène (PP) ou du polyéthylène (PE), ou du polyacide (lactique) (PLA), du polyamide, comme du polyamide 6 ou du polyamide 6-6, ou des mélanges de ceux-ci.

16. Multicouche selon une des revendications précédentes selon laquelle les fibres de la première et/ou la seconde couche fibreuse présentent une section transversale solide ou creuse.

17. Multicouche selon une des revendications précédentes selon laquelle la seconde couche fibreuse comprend des fibres de réemploi recyclées telles que du coton de réemploi, du polyester de réemploi ou d'autres fibres de réemploi synthétiques ou des mélanges de ceux-ci.

18. Multicouche selon une des revendications précédentes comprenant en outre sur la surface de la seconde couche fibreuse qui n'est pas en contact avec la couche résistant à un écoulement d'air au moins une d'une couche de film, une couche de mousse à cellules ouvertes, une couche de feutre supplémentaire, une couche de grille non tissée ou une enveloppe en plastique.

19. Utilisation de la multicouche absorbant le bruit selon la revendication 1 à 10 comme un revêtement de sol automobile ou comme un tableau de bord intérieur automobile.
